# FASCICULE DE BREVET EUROPEEN

(11) **EP 4 476 019 B1**
(45) Date de publication et mention de la délivrance du brevet: **28.10.2026**
(21) Numéro de dépôt: 23706830.9
(22) Date de dépôt: 08.02.2023
(51) Int. Cl.: B23K 20/12, B23K 20/233, B23K 20/24, B23K 101/00, B23K 101/18, B23K 101/34, B23K 103/10

(54) **PROCÉDE D'ASSEMBLAGE DE DEUX ÉLÉMENTS ANODISÉS PAR SOUDAGE PAR FRICTION MALAXAGE**
VERFAHREN ZUM VERBINDEN ZWEIER ANODISIERTER ELEMENTE DURCH REIBRÜHRSCHWEISSEN
METHOD FOR JOINING TWO ANODISED ELEMENTS BY FRICTION STIR WELDING

(30) Priorité: 10.02.2022 FR 2201180
(43) Date de publication de la demande: 18.12.2024
(73) Titulaire: Safran Nacelles, 76700 Gonfreville-l'Orcher (FR)
(72) Inventeur: DIGEOS, Virginie Emmanuelle Anne-Marie, 77550 MOISSY CRAMAYEL (FR); SERRE, Nicolas, 77550 MOISSY CRAMAYEL (FR); PEU, Florian, 77550 MOISSY CRAMAYEL (FR); HOLAY, Xavier, 77550 MOISSY CRAMAYEL (FR)
(74) Mandataire: Casalonga
(86) Numéro de dépôt international: PCT/FR2023/050172
(87) Numéro de publication internationale: WO 2023/152450

(56) Documents cités:
- JP-A- 2005 152 971
- JP-A- H10 211 591
- US-A1- 2007 044 406
- US-A1- 2021 283 711
- US-B1- 6 328 261

## Description

La présente invention concerne les procédés d'assemblage par friction malaxage, également appelé « friction stir welding » en termes anglo-saxons.

En particulier, la présente invention concerne un procédé d'assemblage d'un premier élément avec un second élément conformément au préambule de la revendication 1 (voir par exemple JP 2005 152971 A), pour la protection des surfaces assemblées par friction malaxage, notamment la protection contre la corrosion.

De manière générale, l'invention s'applique à tout type de domaine nécessitant un assemblage par friction malaxage de deux éléments à assembler.

### Techniques antérieures

Dans l'industrie, et notamment dans l'industrie aéronautique, il est courant de devoir assembler plusieurs éléments entre eux. Il peut s'agir par exemple de l'assemblage d'un raidisseur sur un panneau de structure d'un aéronef afin de rigidifier ledit panneau de structure.

Parmi les différents procédés d'assemblage, le rivetage manuel est le plus courant et permet par ailleurs d'établir une protection contre la corrosion des éléments assemblés. Cependant, le rivetage implique des temps d'assemblage longs en raison de son caractère manuel.

Le soudage par friction malaxage est un procédé d'assemblage plus rapide et permettant d'être automatisé. Il permet, à l'aide d'un pion en rotation de moins de 5 millimètres de diamètre, de malaxer ensemble les matières des éléments à assembler et ainsi créer une soudure. Le malaxage convient particulièrement pour des alliages d'aluminium.

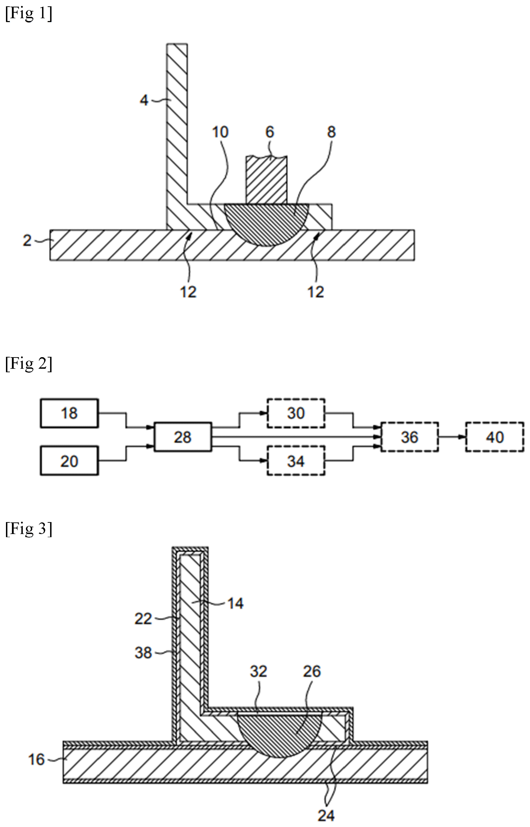

On a représenté schématiquement sur la figure 1 un mode de mise en œuvre d'un procédé de soudage par friction malaxage. La figure 1 illustre une vue en coupe de l'assemblage d'un panneau de structure 2 avec un raidisseur 4, le panneau de structure 2 et le raidisseur 4 mesurant chacun quelques millimètres d'épaisseur. Pour la mise en œuvre du soudage par friction malaxage, un pion 6 se déplace contre le raidisseur 4 en étant maintenu en rotation. Le pion 6 malaxe et mélange ainsi les matières du raidisseur 4 et du panneau de structure 2 de manière à créer un cordon de soudure 8 assemblant les deux éléments.

Cependant, le cordon de soudure 8 ne couvre pas entièrement les surfaces de contact 10 entre le panneau de structure 2 et le raidisseur 4. Des zones non soudées 12 peuvent devenir des zones de rétention de liquide susceptibles de se corroder.

Des solutions pour empêcher la corrosion existent avec l'ajout d'un mastic d'interposition dans les zones non soudées 12.

Néanmoins, le mastic est endommagé et perd ses propriétés d'étanchéité au moment du soudage et le cordon de soudure 8 perd ses propriétés mécaniques en raison de la pollution par incorporation de mastic dans la matière du cordon de soudure 8.

### Exposé de l'invention

La présente invention a donc pour but de pallier les inconvénients précités et de fournir un procédé d'assemblage par soudage par friction malaxage sans risque de corrosion des zones non soudées.

La présente invention définit un procédé d'assemblage d'un premier élément avec un second élément tel que défini dans la revendication 1, comprenant entre autre une étape d'anodisation du premier élément, une étape d'anodisation du second élément et une étape de réalisation d'un cordon de soudure par soudage par friction malaxage du premier élément avec le second élément.

Ainsi, l'anodisation du premier et du second éléments permet de protéger l'interface non soudée et d'éviter la corrosion des premier et second éléments lors d'un soudage par friction malaxage au niveau des zones non soudées, soudage permettant un assemblage rapide et automatisé.

De plus et conformément à l'invention, le procédé comprend une étape d'oxydation du cordon de soudure une fois le soudage par friction malaxage effectué.

Et l'étape d'oxydation du cordon de soudure est obtenue par anodisation locale ou par conversion chimique.

Et conformément à l'invention, le procédé comprend une étape de réactivation de l'anodisation du premier élément et du second élément une fois le soudage par friction malaxage effectué.

Avantageusement, le procédé comprend en outre une étape optionnelle d'application d'un système de peinture comprenant un primaire.

Dans un mode de mise en œuvre, le procédé comprend une étape de pose de mastic sur une zone de contact du premier élément avec le second élément de manière à étanchéifier l'accès à une zone non soudée par le cordon de soudure.

Avantageusement, au moins une des étapes d'anodisation du premier élément ou d'anodisation du second élément est une étape d'anodisation sulfurique ou sulfo-tartrique.

Avantageusement, le premier élément et le second élément comprennent chacun un alliage d'aluminium.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] dont il a déjà été fait mention est une vue schématique en coupe d'un raidisseur et d'un panneau de structure assemblés par un procédé de soudage par friction malaxage ;
[Fig 2] est un organigramme illustrant schématiquement les étapes d'un procédé d'assemblage d'un premier élément avec un second élément ; et
[Fig 3] est une vue schématique en coupe d'un premier élément et d'un second élément assemblés par un procédé d'assemblage ; et
[Fig 4] est une vue schématique en coupe d'un premier élément et d'un second élément assemblés par un procédé d'assemblage comprenant une étape de pose de mastic ; et
[Fig 5] est une variante de la vue schématique en coupe de la figure 4 illustrant un premier élément et un second élément assemblés par un procédé d'assemblage comprenant une étape de pose de mastic.

### Exposé détaillé d'au moins un mode de réalisation

On a représenté schématiquement sur la figure 2 les étapes permettant la mise en œuvre d'un procédé d'assemblage d'un premier élément avec un second élément.

Le premier élément est par exemple réalisé en alliage d'aluminium, par exemple un alliage 2219 ou tout autre alliage pouvant être soudé par friction malaxage. De même, le second élément est réalisé dans un alliage d'aluminium.

Une vue schématique en coupe de l'assemblage final du premier élément 14 avec le second élément 16 est visible sur la figure 3. Dans ce mode de mise en œuvre particulier, le premier élément 14 est un raidisseur et le second élément 16 est un panneau de structure d'un aéronef.

Pour la mise en œuvre de ce procédé, on effectue en premier lieu une étape 18 d'anodisation du premier élément 14.

Parallèlement, on effectue également une étape 20 d'anodisation du second élément 16.

L'anodisation est également appelée oxydation anodique et est bien connue de l'homme du métier. L'anodisation est par exemple une anodisation sulfurique ou sulfo-tartrique. L'anodisation peut également être une anodisation sulfo-borique ou chromique. L'anodisation permet de créer une première couche 22 autour du premier élément 14 et une seconde couche 24 autour du second élément 16, les première et seconde couches 22 et 24 étant électriquement isolantes et protégeant de la corrosion. Les couches 22 et 24 réalisées mesurent par exemple entre 2 et 15 micromètres d'épaisseur.

Une étape de colmatage de la couche anodique peut être réalisée et est connue de l'homme du métier.

Une fois les premier et second éléments 14 et 16 anodisés, on réalise un cordon de soudure 26 lors d'une étape 28. Le cordon de soudure 26 est réalisé par soudage par friction malaxage.

Par exemple, le soudage par friction malaxage est effectué en configuration de recouvrement du premier élément 14 sur le second élément 16, des surfaces planes du premier et du second éléments étant mises en contact l'une avec l'autre de manière à effectuer le soudage du premier élément 14 avec le second élément 16. La matière du second élément 16 est malaxée par un pion (identique au pion 6 de la figure 1) avec la matière du premier élément 14 au travers du premier élément 14. Les paramètres de soudage sont déterminés de sorte que les couches d'anodisation sont broyées dans le cordon de soudure 26 et que les caractéristiques mécaniques de la soudure soient satisfaisantes. Pour cela, les paramètres clefs pour réaliser une couche d'anodisation bien broyée sont le choix de l'outil, le nombre de passe à réaliser, la vitesse d'avance et de rotation, l'inclinaison de l'outil, et le recouvrement entre les passes. Chacun des paramètres est à définir suivant le matériau et l'épaisseur de couche d'anodisation, l'épaisseur des couches d'anodisation dépendant du procédé employé, l'anodisation sulfurique générant des couches plus épaisses que l'anodisation chromique par exemple.

En variante, le soudage peut également être effectué en réalisant une soudure bout à bout entre deux éléments déjà anodisés, suivie d'une retouche locale sur le cordon envers et endroit par conversion chimique ou anodisation locale.

Avantageusement, l'anodisation permet au cordon de soudure 26 de répondre au besoin nécessaire de performances mécaniques alors même qu'une partie des première et seconde couches 22 et 24 sont malaxées et contenues dans le cordon de soudure 26.

Une fois le cordon de soudure 26 réalisé, on effectue une étape 30 d'oxydation du cordon de soudure 26, en particulier de sa face externe du côté du premier élément 14, de manière à également protéger sa surface de la corrosion.

L'étape 30 d'oxydation permet ainsi de créer une troisième couche 32 sur la surface apparente du cordon de soudure 26. L'étape 30 d'oxydation est par exemple réalisée par anodisation locale ou par conversion chimique.

Puis on effectue une étape 34 de réactivation de l'anodisation du premier élément 14 et du second élément 16. Cette étape 34 peut être effectuée directement après l'étape 28 de soudage ou parallèlement à l'étape 30 d'oxydation de cordon de soudure 26, ou encore après cette étape 30. L'étape 34 de réactivation de l'anodisation consiste à effectuer une étape d'application d'un produit de réactivation de manière à raviver les effets des étapes 18 et 20 d'anodisation et à permettre une meilleure adhérence d'un système de peinture, les couches 22 et 24 ayant pu se détériorer au cours de l'étape 28 de réalisation du cordon de soudure 26.

Afin d'améliorer la protection contre la corrosion des premier et second éléments 14 et 16, on effectue une étape 36 optionnelle d'application d'un système de peinture 38. L'étape d'application d'un système de peinture 38 peut être effectuée sans avoir effectué les étapes 30 et 34 précédentes au préalable. L'étape 36 d'application d'un système de peinture peut néanmoins être effectuée après l'une ou après les deux étapes 30 et 34 d'oxydation et de réactivation de l'anodisation.

Le système de peinture 38 comprend par exemple un primaire, de préférence un primaire anti-corrosion. D'autres couches de peintures peuvent être également appliquées sur le primaire.

Afin de garantir l'étanchéité de l'assemblage, on effectue optionnellement une étape 40 de pose de mastic 42 sur une zone de contact 44 du premier élément 14 avec le second élément 16. Le mastic 42 est par exemple appliqué sous forme d'un cordon le long de la zone de contact 44.

La zone de contact 44 correspond à une zone d'accès à une zone non soudée 46 par le cordon de soudure 26, semblable aux zones non soudées 12 représentées à la figure 1. Cette étape 40 peut être effectuée à la place de l'étape 36 d'application d'un système de peinture 38.

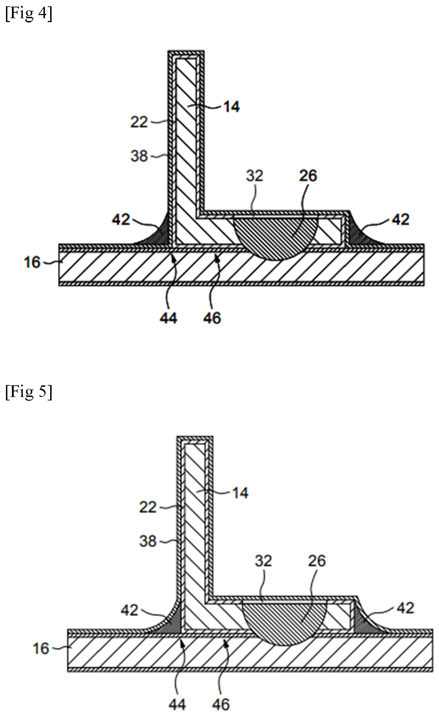

On a également représenté deux autres modes de mise en œuvre du procédé d'assemblage aux figures 4 et 5. La figure 4 illustre l'assemblage du premier élément 14 avec le second élément 16 lorsque l'étape 40 de pose de mastic 42 est effectuée après l'étape 36 d'application d'un système de peinture 38.

La figure 5 illustre l'assemblage du premier élément 14 avec le second élément 16 lorsque l'étape 40 de pose de mastic 42 est effectuée avant l'étape 36 d'application d'un système de peinture 38.

## Revendications

1. Procédé d'assemblage d'un premier élément (14) avec un second élément (16), le procédé comprend une étape (18) d'anodisation du premier élément (14) créant une première couche (22) autour du premier élément (14), une étape (20) d'anodisation du second élément (16) créant une seconde couche (24) autour du second élément (14), les première et seconde couches (22, 24) étant électriquement isolantes et protégeant de la corrosion,
**caractérisé en ce que** le procédé comprend :
une étape (28) de réalisation d'un cordon de soudure (26) par soudage par friction malaxage du premier élément (14) avec le second élément (16), une étape (30) d'oxydation du cordon de soudure (26) obtenue par anodisation locale ou par conversion chimique une fois le soudage par friction malaxage effectué,
et une étape (34) de réactivation de l'anodisation du premier élément (14) et du second élément (16) une fois le soudage par friction malaxage effectué.

2. Procédé selon la revendication 1, comprenant une étape (36) d'application d'un système de peinture (38) comprenant un primaire.

3. Procédé selon l'une quelconque des revendications 1 et 2, comprenant en outre une étape (40) de pose de mastic (42) sur une zone de contact (44) du premier élément (14) avec le second élément (16) de manière à étanchéifier l'accès à une zone non soudée (46) par le cordon de soudure (26).

4. Procédé selon l'une quelconque des revendications 1 à 3, dans lequel au moins une des étapes (18 ; 20) d'anodisation du premier élément (14) ou d'anodisation du second élément (16) est une étape d'anodisation sulfurique ou sulfo-tartrique.

5. Procédé selon l'une quelconque des revendications 1 à 4, dans lequel le premier élément (14) et le second élément (16) comprennent chacun un alliage d'aluminium.

## Patentansprüche

1. Verfahren zum Verbinden eines ersten Elements (14) mit einem zweiten Element (16), wobei das Verfahren einen Schritt (18) des Anodisierens des ersten Elements (14), bei dem eine erste Schicht (22) um das erste Element (14) herum erzeugt wird, und einen Schritt (20) des Anodisierens des zweiten Elements (16) umfasst, bei dem eine zweite Schicht (24) um das zweite Element (14) herum erzeugt wird, wobei die erste und die zweite Schicht (22, 24) elektrisch isolierend und vor Korrosion schützend sind,
**dadurch gekennzeichnet, dass** das Verfahren umfasst:
einen Schritt (28) des Herstellens einer Schweißnaht (26) durch Rührreibschweißen des ersten Elements (14) mit dem zweiten Element (16),
einen Schritt (30) des Oxidierens der Schweißnaht (26), der durch lokale Anodisierung oder durch chemische Umwandlung erreicht wird, nachdem das Rührreibschweißen durchgeführt wurde,
und einen Schritt (34) des Reaktivierens der Anodisierung des ersten Elements (14) und des zweiten Elements (16), nachdem das Rührreibschweißen durchgeführt wurde.

2. Verfahren nach Anspruch 1, umfassend einen Schritt (36) des Auftragens eines Lacksystems (38), das eine Grundierung umfasst.

3. Verfahren nach einem der Ansprüche 1 und 2, ferner umfassend einen Schritt (40) des Auftragens von Spachtelmasse (42) auf einen Kontaktbereich (44) des ersten Elements (14) mit dem zweiten Element (16), um den Zugang zu einem ungeschweißten Bereich (46) durch die Schweißnaht (26) abzudichten.

4. Verfahren nach einem der Ansprüche 1 bis 3, wobei mindestens einer der Schritte (18; 20) des Anodisierens des ersten Elements (14) oder des Anodisierens des zweiten Elements (16) ein Schritt des Anodisierens mit Schwefelsäure oder Schwefel- und Weinsäure ist.

5. Verfahren nach einem der Ansprüche 1 bis 4, wobei das erste Element (14) und das zweite Element (16) jeweils eine Aluminiumlegierung umfassen.

## Claims

1. Method for assembling a first element (14) with a second element (16), the method comprises a step (18) of anodising the first element (14) to create a first layer (22) around the first element (14), a step (20) of anodising the second element (16) to create a second layer (24) around the second element (14), the first and second layers (22, 24) being electrically insulating and protective against corrosion,
**characterised in that** the method comprises:
a step (28) of forming a weld bead (26) by friction stir welding the first element (14) to the second element (16),
a step (30) of oxidising the weld bead (26) obtained by local anodisation or by chemical conversion once the friction stir welding has been carried out,
and a step (34) of reactivating the anodisation of the first element (14) and second element (16) once the friction stir welding has been carried out.

2. Method according to claim 1, comprising a step (36) of applying a paint system (38) comprising a primer.

3. Method according to any one of claims 1 and 2, further comprising a step (40) of applying sealant (42) to a contact area (44) between the first element (14) and the second element (16) so as to seal off access to an area (46) not welded by the weld bead (26).

4. Method according to any one of claims 1 to 3, wherein at least one of the steps (18; 20) of anodising the first element (14) or anodising the second element (16) is a sulphuric or sulpho-tartaric anodising step.

5. Method according to any one of claims 1 to 4, wherein the first element (14) and the second element (16) each comprise an aluminium alloy.
